# EUROPEAN PATENT SPECIFICATION

(11) **EP 2 543 336 B1**
(45) Date of publication and mention of the grant of the patent: **05.07.2017**
(21) Application number: 10847074.1
(22) Date of filing: 16.04.2010
(51) Int. Cl.: A61C 11/02, A61C 11/00, A61C 11/08, A61C 11/06

(54) **ARTICULATOR**
ARTIKULATOR
ARTICULATEUR

(30) Priority: 05.03.2010 KR 20100019932
(43) Date of publication of application: 09.01.2013
(73) Proprietor: Lee, Chae-Bung, Gyeongsangbuk-do 780-140 (KR); Kim, Se-Hun, Jeonbuk 561-816 (KR)
(72) Inventor: Lee, Chae-Bung, Gyeongsangbuk-do 780-140 (KR); Kim, Se-Hun, Jeonbuk 561-816 (KR)
(74) Representative: Hering, Hartmut
(86) International application number: PCT/KR2010/002400
(87) International publication number: WO 2011/108776

(56) References cited:
- DE-A1- 2 922 153
- JP-A- 2009 050 301
- KR-B1- 100 865 591
- US-A- 1 637 569
- US-A- 3 067 515
- US-A- 3 885 311
- US-A- 4 496 320
- US-A- 4 659 311
- US-A- 5 348 471
- US-B1- 6 234 794
- US-B1- 6 450 809

## Description

### [Technical Field]

The present invention relates to an articulator capable of checking the alignment of teeth by attaching upper and lower jaw models, and more particularly to an articulator in which upper and lower jaw parts have simple movement structures, the occlusal error of upper and lower jaw models can be minimized, and the upper and lower jaw models can be accurately mounted on an occlusal plane.

### [Background Art]

In general, an articulator is an appliance used for manufacturing and diagnosing related to dentures, tooth crown and bridge restoration, and a dental prosthesis by measuring the occlusal states of teeth or a gum. The articulator reproduces the position relations of a jawbone and teeth based on a cranial bone, and the movement of a lower jaw by mechanically emulating the position relations between the jawbone and teeth based on the cranial bone, and the movement of the lower jaw. Examples are provided, amongst others, by US5348471 and US4496320. Actually, in a human body, the movement of upper and lower jaws is achieved by the movement of the lower jaw without the movement of the upper jaw. The structures of most articulators are formed by emulating the movement of the upper and lower jaws of the human body, and a reference axis about which upper and lower jaw fixing parts are folded is formed about a condyle.

In addition, articulators used to manufacture the dental prosthesis have been suggested as several many types of articulators such as a plane line articulator, which can reproduce only one lower jaw position, various adjustable articulators having higher reproducibility, and special articulators such as a free joint articulator.

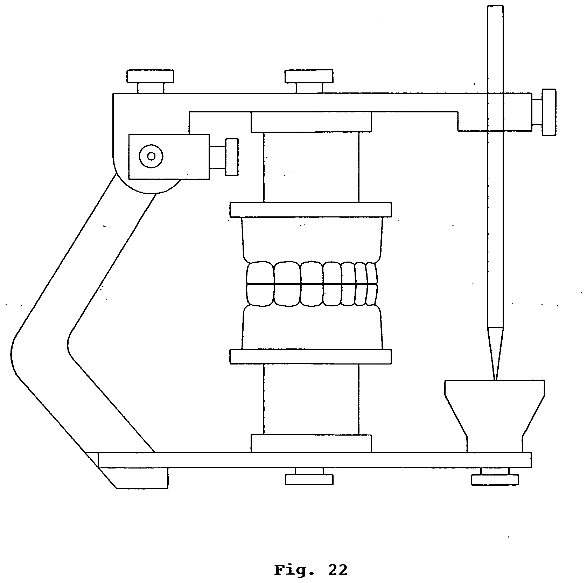

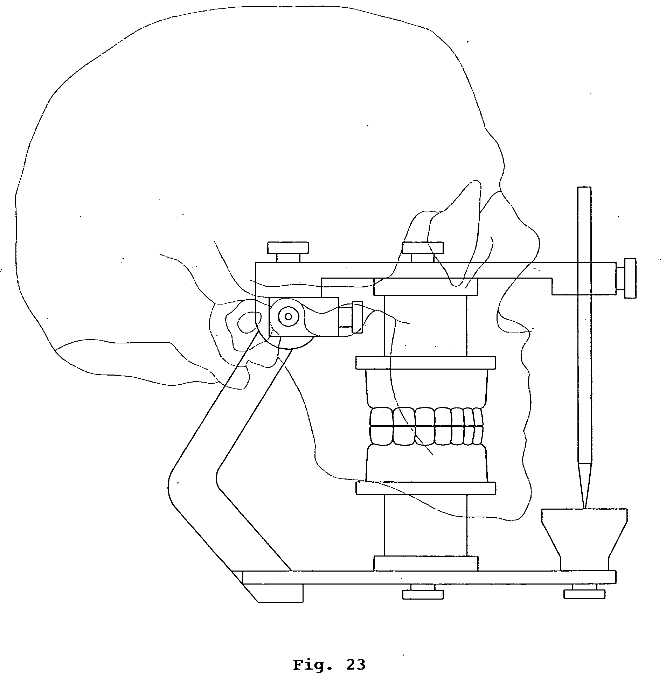

However, the above articulator has the following problems. The articulator is manufactured by allowing a position of a reference axis to correspond to a condyle as shown in FIGS. 22 and 23 in order to reproduce the lower jaw movement of a human body. However, in terms of a human anatomy, the condyle has a spherical shape, so that the condyle has a great difference from the operating principle of a shaft. In addition, the up-down movement of teeth is achieved through the combination of the position of the condyle and the movement of a specific muscle (masticatory muscle). However, if only the condyle serves as the reference axis as described above, the movement of the specific muscle is excluded, so that errors may occur when the movement of the upper and lower jaws is measured.

Further, the structure of the articulator is complicated in order to adjust the error margin. In addition, in order to mount the upper and lower jaw models, the upper and lower jaw fixing parts are exploded, mounted, and reassembled by using additional tools, so that a user may feel inconvenience. In addition, any patient may have difficulty when manipulating the articulator in order to adjust the height or the width of the models. Since the structure of the articulator is complicated, the manufacturing cost of the articulator may be increased.

In addition, the conventional articulator fixes the upper and lower jaw models while checking the position of the occlusal plane by using an auxiliary unit such as a rubber band or a laser in order to place the upper and lower models on the correct occlusal plane. However, a user has great difficulty when mounting the upper and lower jaw models at correct positions by using the auxiliary unit. In addition, the errors may finely occur due to the thickness of the auxiliary unit.

In addition, even though the models are adjusted suitably for the oral structure of a patient by using the articulator, the mechanical manipulation of adjusting the height and the width of the models is manually performed, so that fine errors may occur. Inaddition, even though the models are accurately adjusted, since a check bite used to check the occlusal state actually has a very thin thickness, the manual adjustment of the error margin is actually impossible. Accordingly, the post process is required in the state that the user wears the dental prosthesis.

### [Disclosure]

### [Technical Problem]

The invention is as defined in claim 1.

The present inventionhas beenmade to solve the above problems occurring in the prior art, and an obj ect of the present invention is to provide an articulator in which an error margin of the articulator can be minimized by setting a central position of physiological occlusion in the movement of the upper and lower jaws as a reference axis, and an accurate occlusion can be achieved by simplifying the operating structure and the use of upper and lower jaw fixing members of the articulator while correctly placing the upper and lower models on the occlusal plane.

### [Technical Solution]

In order to accomplish the above object of the present invention, a reference axis is formed on a line extending from an occlusal plane about which upper and lower jaw fixing members are folded, so that the tangential line of the rotation movement is perpendicular to the occlusal plane. The hinge shaft is formed on the lower jaw fixing member, so that the upper jaw fixing member is detached from the lower jaw fixing member through one touch scheme.

In addition, the jig used to adjust the horizontal state of the lower jaw model is detached from the hinge shaft of the lower jaw fixing member through one touch scheme, so that the upper and lower jaw models are correctly positioned on the occlusal plane. A position shaft is formed in the jig to fix the lower jaw model, thereby exactly performing occlusion measurement.

### [Advantageous Effects]

As described above, according to the present invention, an error margin of the articulator can be minimized by setting a central position of physiological occlusion of teeth as the referenceaxis, so that occlusion can be more accurately achieved. In addition, the structure of the articulator can be simplified, so that the articulator can be easily manufactured and the manufacturing cost of the articulator can be reduced.

When the upper and lower jaw models are mounted by using the articulator, the upper and lower jaw models can be mounted by simply detaching the upper jaw fixing member without disassembling the articulator. Accordingly, the user can conveniently use the articulator and the working time can be reduced.

In addition, since the position of the occlusal plane can be set by using the jig, the margin of the occlusal error can be more reduced.

### [Description of Drawings]

FIG. 1 is a perspective view showing one embodiment of the present invention;
FIG. 2 is a side view showing a folding structure of an articulator according to the present invention;
FIG. 3 is a schematic view showing a physiological movement of the articulator according to the present invention;
FIG. 4 is a perspective view showing the disassembled structure of upper and lower jaw fixing members according to the present invention;
FIG. 5 is a side sectional view showing the disassembled structure of the upper and low jaw fixing members according to the present invention;
FIG. 6 is a top sectional view showing the twisted state of a hinge shaft and a rotation support member according to the present invention;
FIG. 7 is a side view showing a rotation support member according to another embodiment of the present invention;
FIG. 8 is a side view showing the operating structure of a guide pin of an upper jaw fixing member according to the present invention;
FIG. 9 is a perspective view showing the assembling structure of an adjusting unit of an upper jaw fixing member according to the present invention;
FIG. 10 is a perspective view showing the assembling state of a lower jaw fixing member and a jig according to the present invention;
FIG. 11 is a perspective view showing the assembling state of the jig according to the present invention;

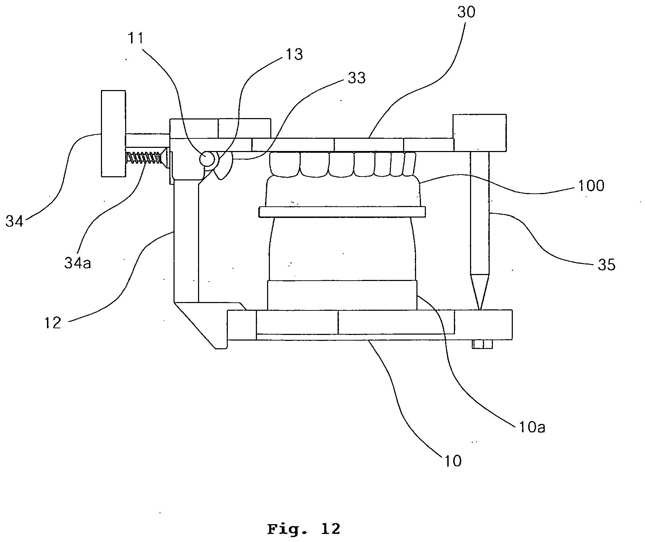

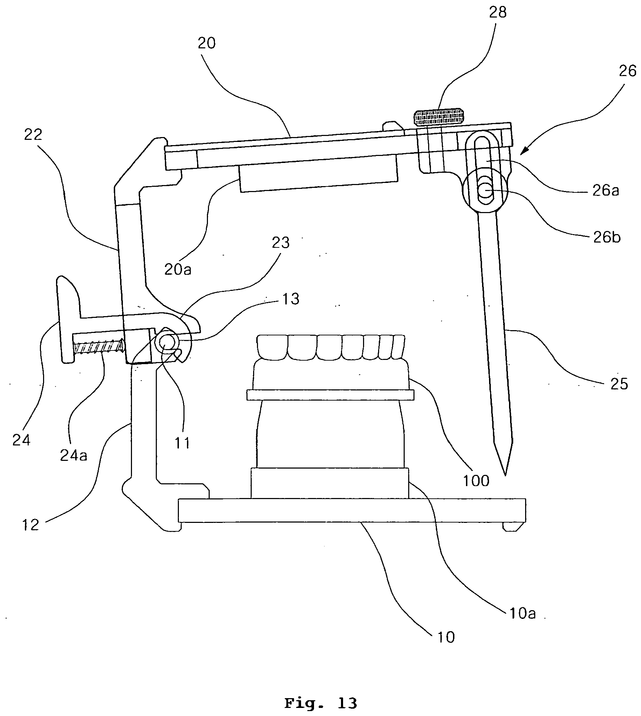

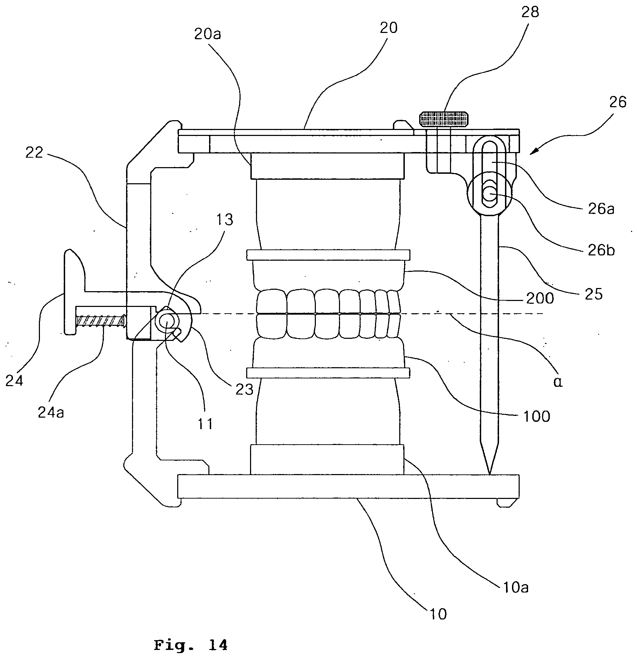

FIGS. 12 to 14 are schematic views showing the procedure of mounting upper and lower jaw models;

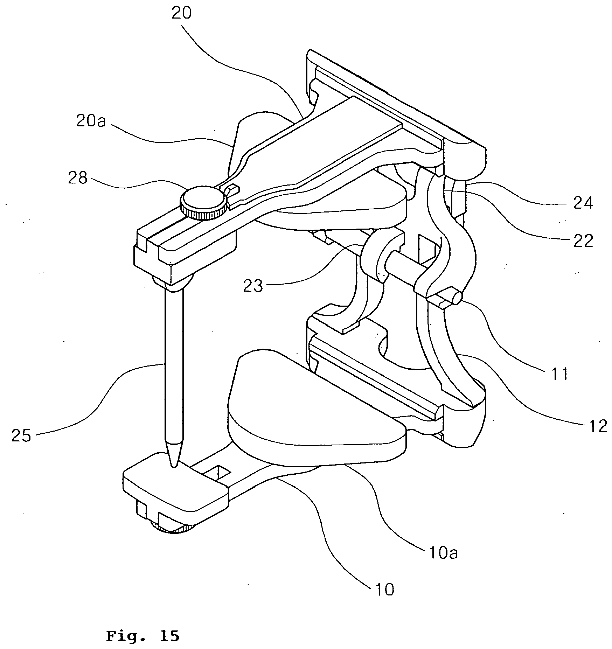

FIG. 15 is an articulator according to another embodiment of the present invention;
FIGS. 16 and 19 are perspective views showing the jigaccording to another embodiment of the present invention;
FIGS. 17 and 18 are views showing the use of the jig of FIG. 16;
FIGS. 20 and 21 are views showing the use of the jig of FIG. 19;
FIG. 22 is a side view showing the folding structure of the articulator according to the related art; and
FIG. 23 is a schematic view showing the position of the reference axis of the articulator according to the related art.

### [Best Mode]

According to the present invention, a lower jaw fixing member 10 to mount a lower jaw model 100 and an upper jaw fixing member 20 to mount an upper jaw model 200 is vertically folded about a hinge shaft 11. Columns 12 and 22 formed at the rear portions of the lower and upper jaw fixing members 10 and 20 have the same height, so that the hinge shaft 11 is provided on the line extending from an occlusal plane α, thereby allowing the lower and upper jaw fixing members 10 and 20 to operate vertically symmetrically to each other about the hinge shaft 21. When the upper and lower jaw models 200 and 100 are vertically folded with each other, a tangential line β of the rotation movement is perpendicular to the occlusal plane α.

### [Mode for Invention]

Hereinafter, exemplary embodiments according to the present invention will be described with accompanying drawings. In the following description, the same elements in accompanying drawings will be assigned with the same reference numbers.

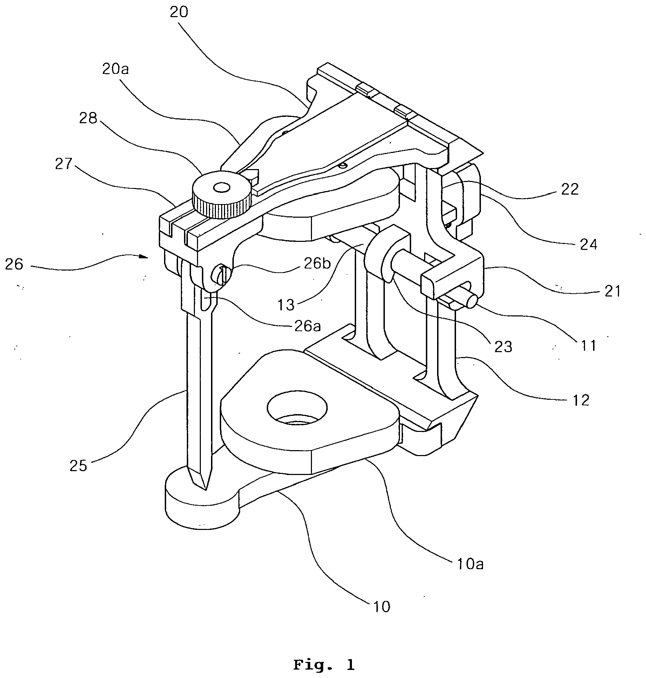

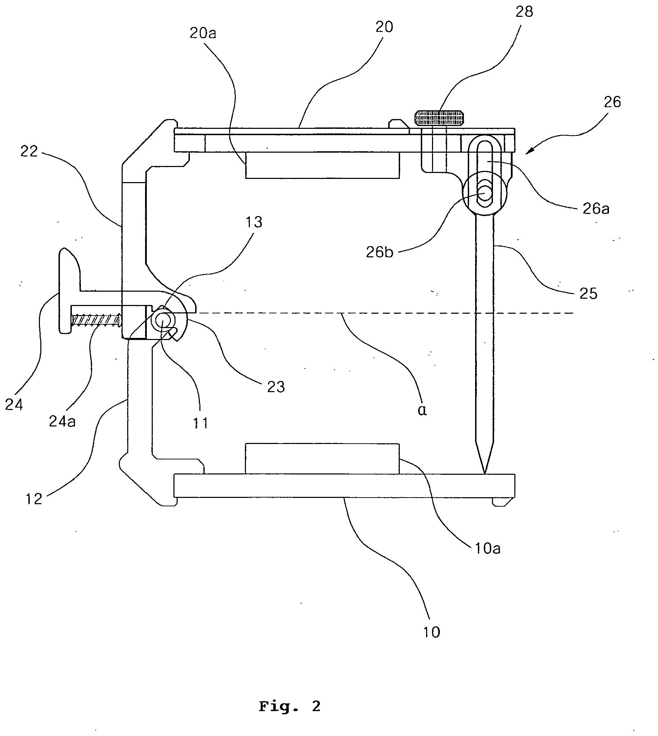

As shown in FIGS. 1 and 2 , according to the present invention, the lower and upper jaw fixing members 10 and 20 are provided and vertically folded with each other about the hinge shaft 11 of the upper jaw fixing member 20. The occlusal plane α is set by adjusting the horizontal degree of the upper jaw fixing member 20 using a guide pin 25 provided at the front portion of the upper jaw fixing member 20, and the lower and upper jaw models 100 and 200 are mounted on the occlusal plane α, so that the alignment of teethes can be checked.

In this case, the lower and upper jaw models 100 and 200 are mounted on the lower and upper jaw fixing members 10 and 20, respectively. In addition, the lower and upper jaw models 100 and 200 are detachably mounted on mounting plates 10a and 20a.

In this case, preferably, the mounting plates 10a and 20a are detachably mounted on the upper and lower jaw fixing members 10 and 20 by using magnets.

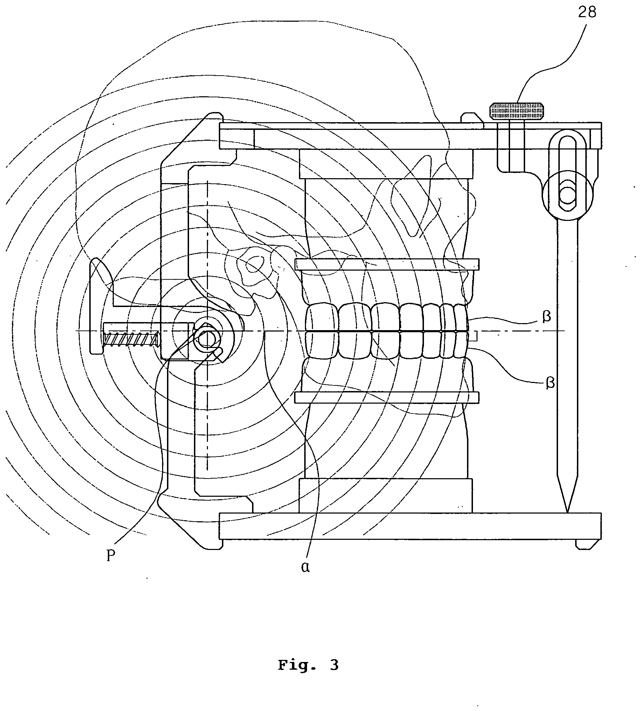

In addition, the lower and upper jaw fixing members 10 and 20 are provided at the rear portions thereof with columns 12 and 22, which are vertically erected and linked with the hinge shaft 11. In this case, the column 12 provided in the lower jaw fixing member 10 and the column 22 provided in the upper jaw fixing member 20 have the same length, the hinge shaft 11 is provided on the line extending from the occlusal plane α, so that the lower and upper jaw fixing members 10 and 20 operate vertically symmetrically to each other. Accordingly, as shown in FIG. 3, the tangential line β of the rotation movement of the upper and lower jaw models 100 and 200 makes contact with the occlusal plane α perpendicularly to the occlusal plane α, so that the upper and lower jaw models 100 and 200 are vertically folded with each other about a point P serving as the central point of the physiological movement of teeth.

In other words, the upper and lower jaw models 100 and 200 are vertically folded with each other about the reference point P provided at the rear portion so that the upper and lower jaw models 100 and 200 vertically operate, thereby allowing the movement of the lower and upper jaws to be similar to the physiological movement of teeth. Accordingly, the occlusal error margin of the articulator is minimized, so that occlusion can be more accurately achieved.

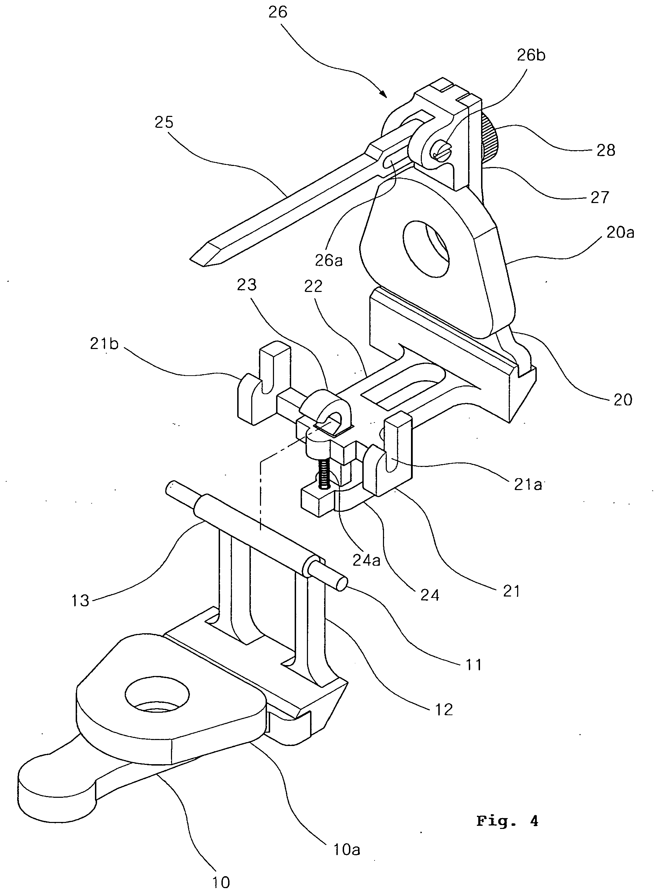

Hereinafter, the folding structure of the lower and upper jaw fixing members 10 and 20 will be described in more detail based on the assembling structure shown in FIG. 4. The lower jaw fixing member 10 has a shaft 13 provided at an upper end of the column 12 formed at the rear portion, and the hinge shaft 11 protrudes from both sides of the shaft 13. The upper jaw fixing member 20 has rotation support members 21 which are provided at a lower end of the column 22 and provided in a substantially C shape with a groove 21a, so that the upper jaw fixing member 20 is axially coupled with the hinge shaft 11 and thus folded in the vertical direction. The upper jaw fixing member 2 0 has a hook 2 3 provided at the central portion between both rotation support members 21 in such a manner that the hook 23 is locked with the shaft 13. Accordingly, in the state that the upper jaw fixing member 20 is assembled with the lower jaw fixing member 10, the upper jaw fixing member 20 is not arbitrarily detached from the lower jaw fixing member 10. In addition, the upper jaw fixing member 20 may be detached from the lower jaw fixing member 10 while forming a rotatable structure. A push switch 24 is provided at the rear portion of the hook 23 and has the force of the restoration by a spring 24a, so that the upper jaw fixing member 20 may be detached from the lower jaw fixing member 10 through one touch scheme. Inclined surfaces 23b and 21b are formed at the front end portion of the hook 23 and the lower end portion of the rotation support member 21, respectively, when the lower jaw fixing member 10 is coupled with the upper jaw fixing member 20, the inclined surface 23b of the hook 23 moves along the top surface of the shaft 12, so that the hook 23 is press-fitted around the shaft 12, and the inclined surface 21b of the rotation support member 21 moves along the top surface of the hinge shaft 11, so that the rotation support member 21 is press-fitted around the hinge shaft 11. Therefore, the press-fitting of the lower and upper jaw fixing members 10 and 20 is enabled, so that the lower jaw fixing member 10 can be easily assembled with the upper jaw fixing member 20.

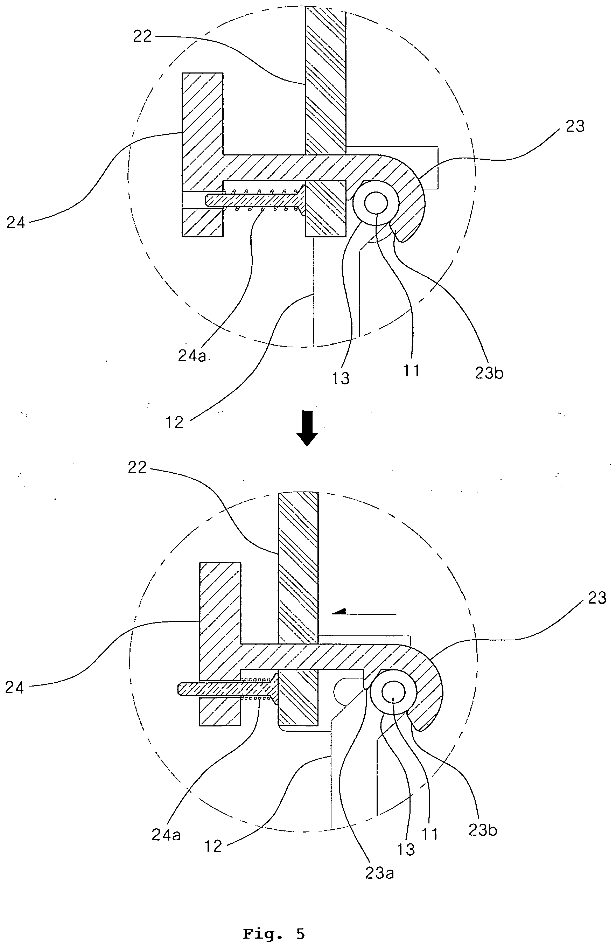

In contrast, as shown in FIG. 5, in order to detach the upper jaw fixing member 20 from the lower jaw fixing member 10, if a push switch 24 is pressed in the state that the upper jaw fixing member 20 is held, a push bar 23a protruding inside the hook 23 pushes the shaft 12 forward, so.that the locking state of the rotation support member 21 is released. Accordingly, the upper jaw fixing member 20 can be simply detached upward from the lower jaw fixing member 10.

Accordingly, when the lower and upper models 100 and 200 are mounted or unmounted, the mounting or unmounting can be simply performed after the upper jaw fixing member 200 has been detached from the lower jaw fixing member 100. Accordingly, the mounting can be easily performed and the working time can be reduced.

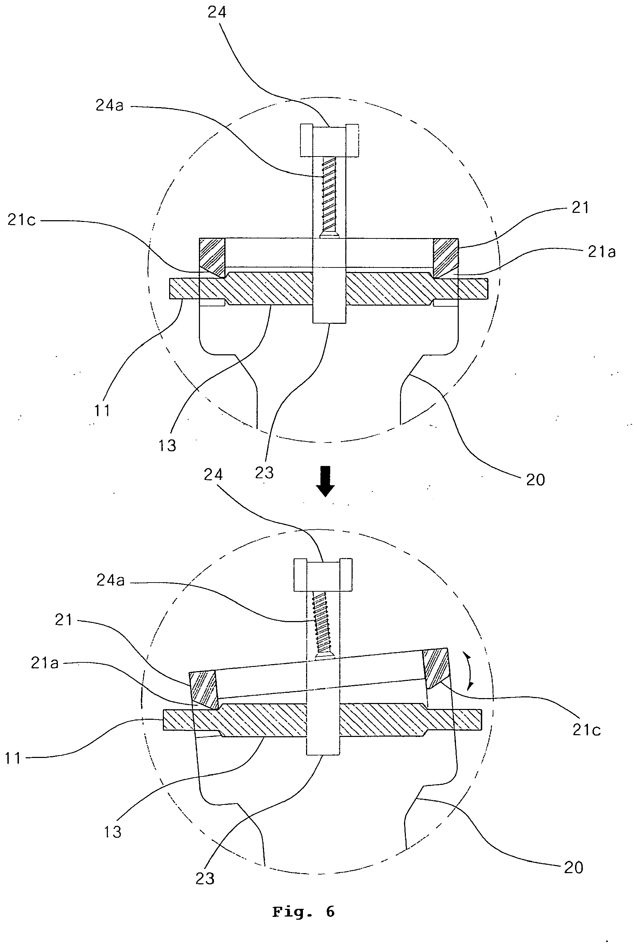

Further, in the articulator, a check bite is interposed between the lower and upper jaw models 100 and 200 to determine the occlusal state between the lower and upper jaw models 100 and 200, and the lower and upper jawmodels 100 and 200 are twisted left or right, so that the occlusal state of teeth is determined. As described above, the rotation support member 21 has a substantially C shape, so that the hinge shaft 11 may be detached forward. Accordingly, in the state that the hinge shaft 11 is fixed by the hook 23, the lower and upper jaw fixing members 10 and 20 can be twisted left or right. As shown in FIG. 6, the rotation support member 21 has a gradient 21c formed outward from an inner end portion of the groove 21a, thereby preventing the hinge shaft 11 from being locked with a step when the upper jaw fixing member 20 is twisted left or right. Accordingly, the upper jaw fixing member 20 can be smoothly twisted left or right.

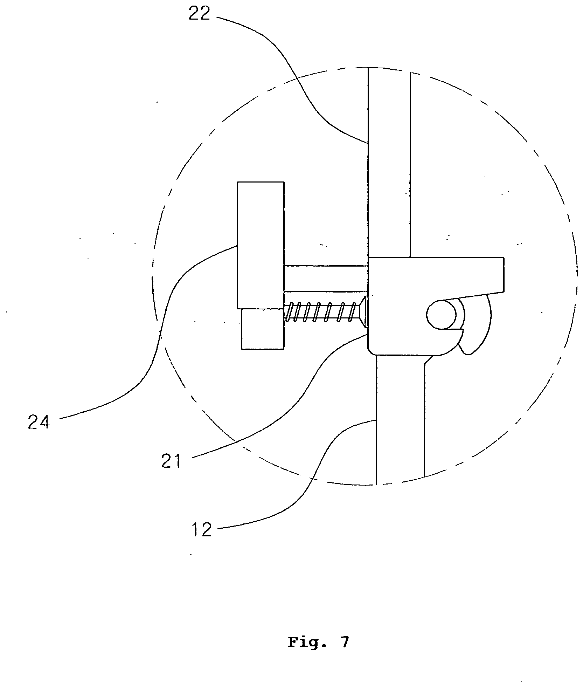

In addition, as shown in FIG. 7, if the top surface of the groove 21a is inclined at an angle of -2°, the upper jaw fixing member (20) more approximately move to the physiological occlusal state of the teeth when the upper jaw fixing member 20 is twisted left or right, so that the occlusal measurement may be more accurately performed.

In this case, a reason that the inclination angle is set an angle of -2° is as follows. When a virtual line connecting the point P, which serves as the central point of the physiological movement, with an interincisal point is employed as a reference line, the inclination angle of a line connecting the point P and an upper end point of a front tooth is -2°. Accordingly, if the top surface of the groove 11a is inclined at an angle of -2° corresponding to the inclination angle of -2° as described above, the upper jaw fixing member is twisted left or right more similarly to the physiological movement.

Hereinafter, the working sequence of the articulator will be described below. The sequence of checking the occlusal state is made by folding the upper and lower jaw fixing members 10 and 20 with each other after providing the lower jaw model 100 at the upper portion of the lower jaw fixing member 10, mounting the lower jaw model 100 on the lower jaw fixing member 10 by using a plaster, providing the upper jaw model 200 under the upper jaw fixing member 20, and mounting the upper jaw model on the upper jaw fixing member 20 by using the plaster.

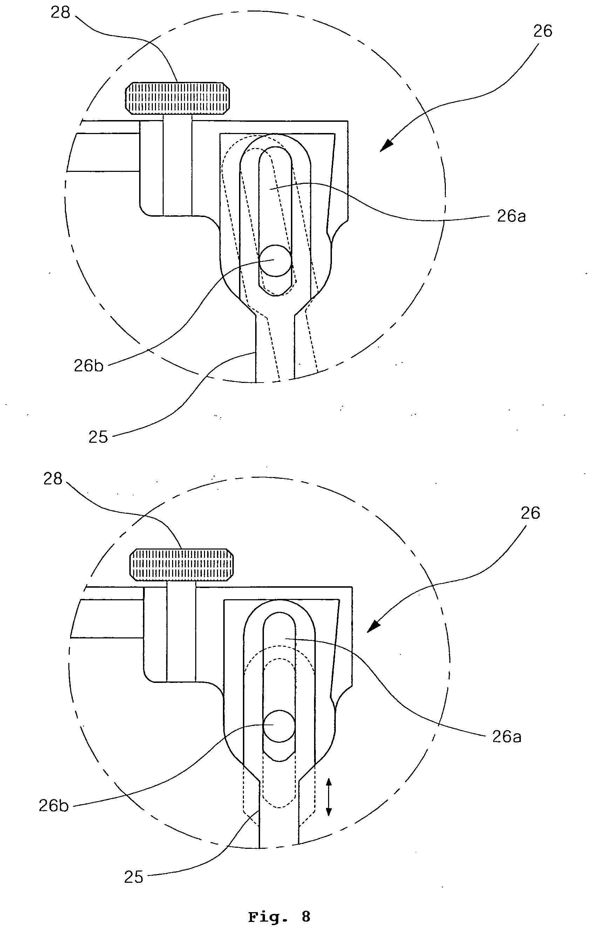

Meanwhile, the upper jaw fixing member 20 has the guide pin 25 formed at the front portion thereof so that the horizontal state of the upper jaw fixing member 20 can be held. As shown in FIG. 8, the guide pin 25 is provided at the upper end thereof with an adjusting unit 26 to vertically move the guide pin 25 while adjusting the angle of the guide pin 25 forward or backward.

To this end, the adjusting unit 26 has an elongated hole 26a at the upper portion of the guide pin 25 such that the elongated hole 26a is coupled with a fixing shaft 26b. Accordingly, the guide pin 25 can vertically move and the angle of the guide pin 25 can be adjusted.

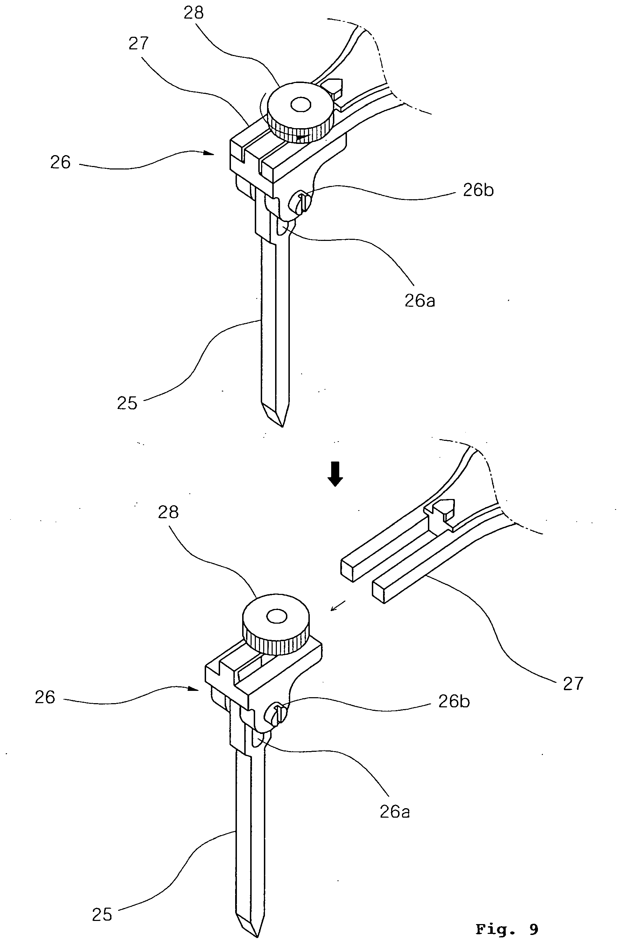

In addition, when the upper jaw f ixingmember 20 is vertically folded, the position of the guide pin 25 is slightly moved forward or backward. In order to compensate for the slight movement, the adjusting unit 26 is coupled with a guide rail 27 provided at the front portion of the upper jaw fixing member 20 while forming a rail structure as shown in FIG. 9. Accordingly, the adjusting unit 26 is slidably operated forward or backward to correct the position of the guide pin 25.

In this case, the fixing of the guide pin 25 and the forward movement or the backward movement of the adjusting unit 26 is secured by a fastening unit 28, so that the guide pin 25 and the adjusting unit 2 6 must be fixed at a right position. In addition, the operation parts of the guide pin 25 and the adjusting unit 26 are graduated, so that the guide pin 25 and the adjusting unit 26 may. be provided at a right position.

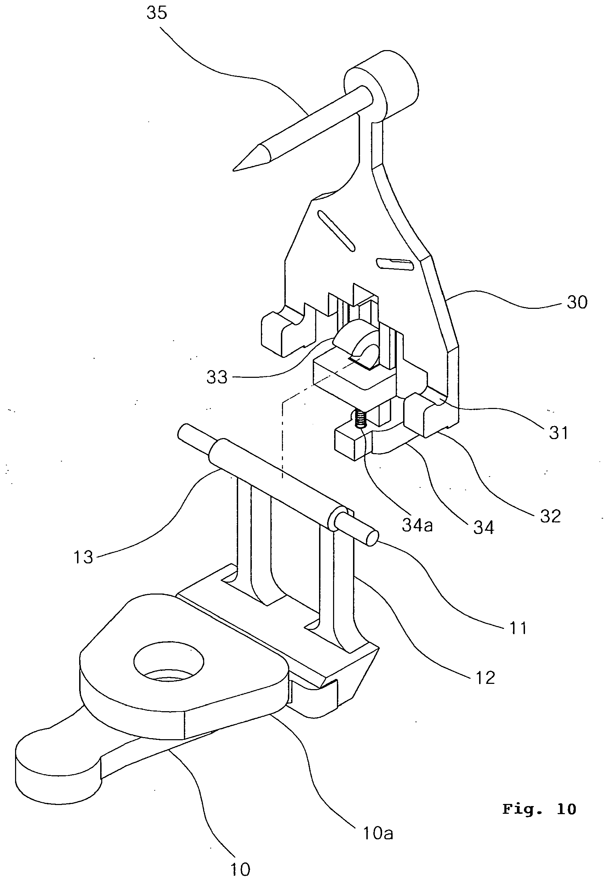

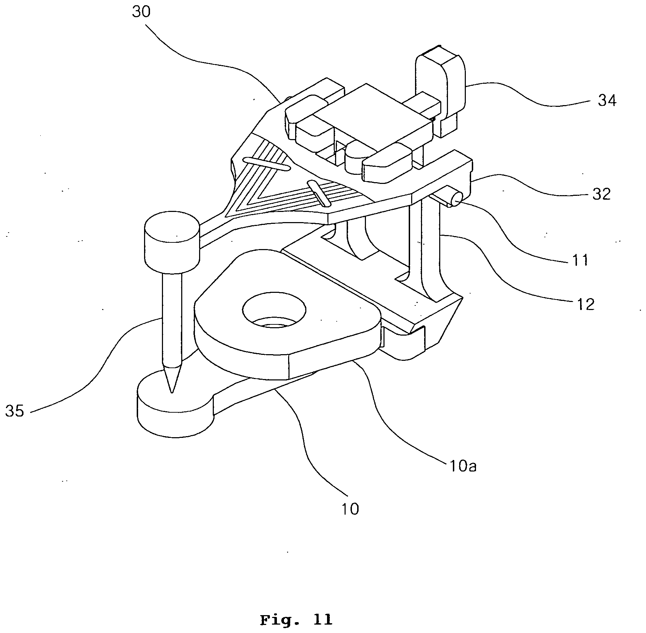

In addition, according to the present invention, as shown in FIGS. 10 and 11, when the lower jaw model 100 are positioned, the lower jaw model 100 maybe correctly positioned on the occlusal plane by using a jig 30. The jig 30 preferably has the same mounting structure as that of the upper raw fixing member 20 described above.

In other words, the jig 30 is provided at a rear portion thereof with a support member 32 which protrudes downward and has a mounting groove 31 therein. Thus, the hinge shaft 11 is firmly secured into the mounting groove 31, while the jig (30) is being detachably coupled with a shaft 13 by a hook 33 formed at the central portion between support members 32. In this case, a push switch 34 is formed at the rear portion of the hook 33, and has the force of restoration by a spring 34a, so that the shaf t 13 may be detached from the hook 33 through one touch scheme.

In addition, if inclined surfaces 33b and 31b are formed at the front end portion of the hook 33 and the lower end portion of the support member 32, respectively, when the jig 30 is coupled, the inclined surface 33b of the hook 33 moves along the top surface of the shaft 13, so that the hook 33 is press-fitted around the shaft 13, and the inclined surface 31b of the rotation support member 32 moves along the top surface of the hinge shaft 11, so that the support member 32 is press-fitted around the hinge shaft 11. Therefore, the press- is enabled, so that the assembling work can be easily performed.

In contrast, in order to detach the jig 30 from the lower jaw fixing member 10, if a push switch 34 is pressed, a push bar 23a protruding inside the hook 33 pushes the shaft 13 forward, so that the locking state of the support member 32 is released. Accordingly, the jig 30 may be simply detached upward from the lower jaw fixing member 10.

In this case, the jug 30 is provided at the front portion thereof with a vertical pin 35, so that the mounting state of the jig 30 may be maintained in a horizontal state. In addition, the jig 30 sets the occlusal plane α of the lower jaw model 100. Accordingly, the lower jaw model 100 is correctly positioned while adhering to the lower end of the jig 30.

In other words, the bottom surface of the jig 30 serves as the occlusal plane α, so that the lower jaw model 100 adheres to the lower end of the jig 30 without eye measurement or an additional unit such as a rubber band or a laser. Thus, the lower jaw model 100 may be provided at an accurate position of the occlusal plane α.

In addition, in general, when the articulator is used, the work of the articulator is performed with respect to an edentulous patient having no tooth by allowing the occlusal plane α to maintain a horizontal state. In contrast, the work of the articulator is performed with respect to a dentulous patient by inclining the occlusal plane α at an angle of -2°. In this case, the jig 30 may be used for the edentulous patient or the dentulous patient by setting the height of the vertical pin 35 provided in the jig 30.

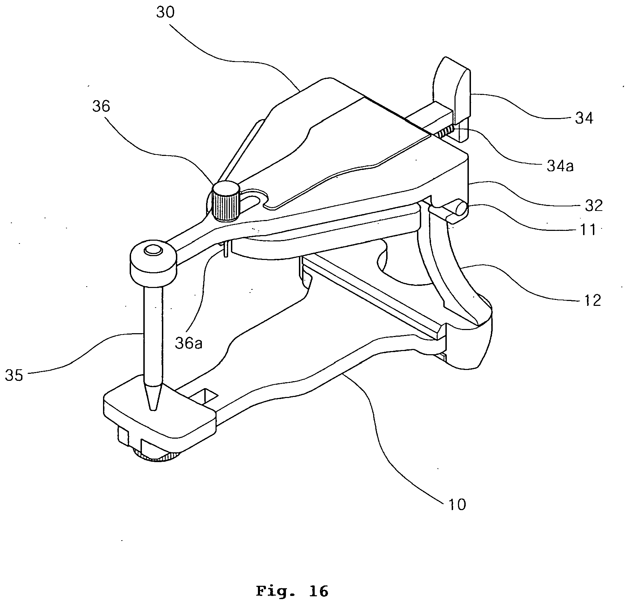

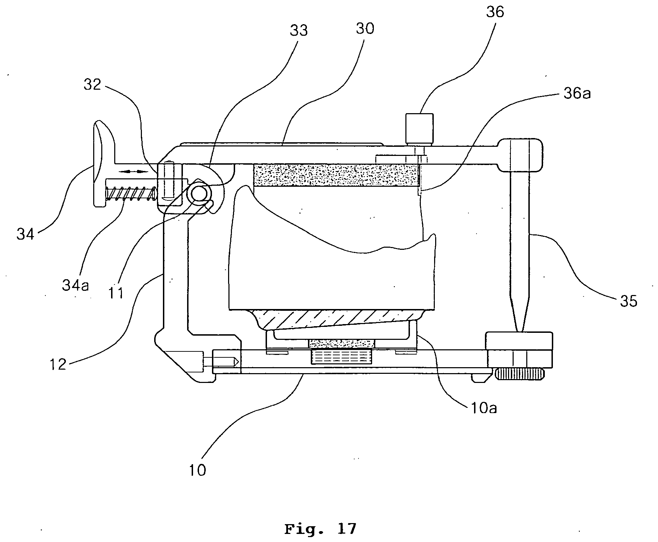

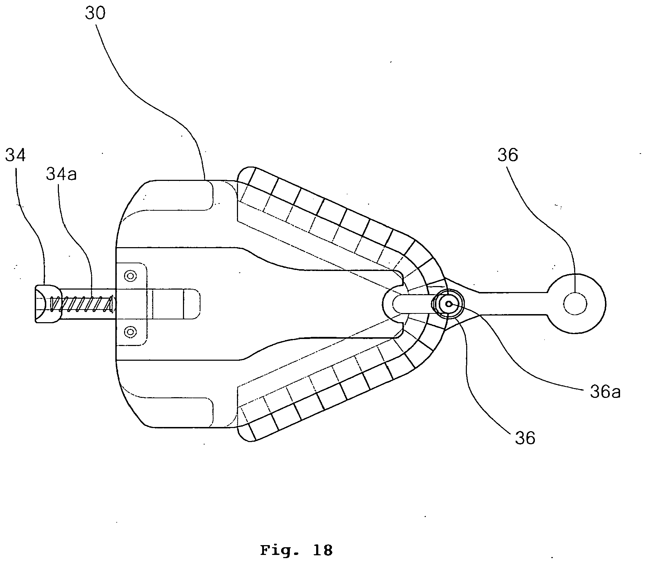

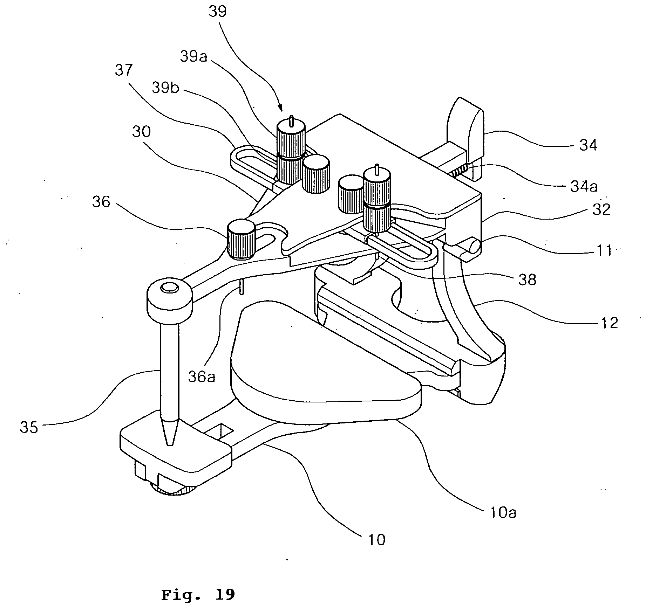

In addition, as shown in FIGS. 16 to 18, the jig 30 has an interincisal point position pin 36a slidably moving forward or backward by a knob 36, so that the interincisal point of the lower jaw model may be fixed. In addition, as shown in FIG. 19, an old position pin 38 is installed in an old tooth guide 17 provided at the rear portion of the jig 39, and transferred left or right while being lifted up or down by the knob 39. Accordingly, the old position pin 38 is pressed on the top surface of an old tooth, thereby firmly securing the lower jaw model.

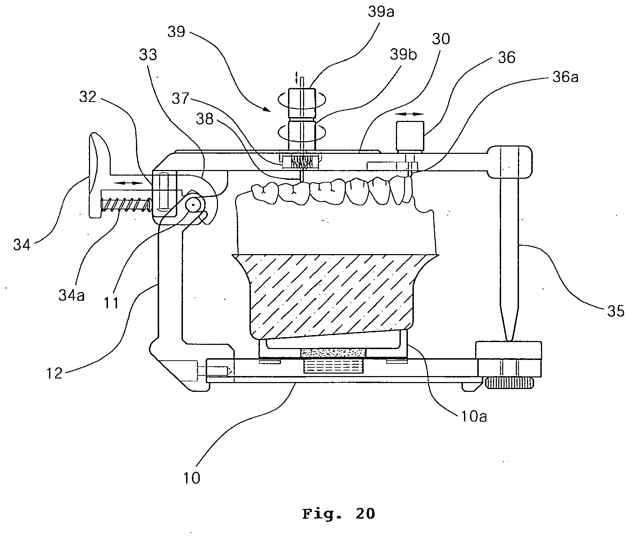

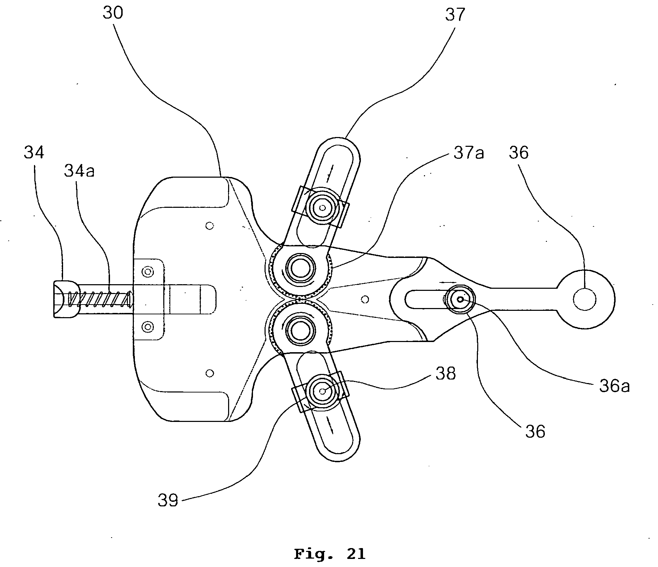

In this case, as shown in FIG. 20, the knob 39 includes upper and lower knobs 39a and 39b formed at two layers. The upper knob 39a moves up or down the old tooth position pin 37 so that the height of the old tooth position pin 37 maybe vertically adjusted, and the lower knob 39b adjusts the old tooth position pin 38 left or right as shown in FIG. 21, so that the interval between left and right teeth can be adjusted.

To this end, the lower knob 39b is engaged with the rake gear formed in the old tooth guide 37. Therefore, as the lower knob 39b is rotated, the old position pin 38 is finely moved left or right along the rake gear, so that the position of the old position pin 38 can be adjusted according to the size of a jaw joint.

In addition, left and right old tooth guides 37 are engaged with each other. Accordingly, even if the angle of one old tooth guide 37 is adjusted, the other old tooth guide 37 is moved symmetrically to the one old tooth guide 37, so that the position of the old tooth can be easily set. The rotated sides of the old tooth guides 37 are provided at outer peripheral surfaces thereof with pressing packings 37a, so that the pressing packings 37a press each other while moving horizontally.

In addition, the thickness of the pressing packing 37a is adjusted, so that the adhering force between thepressingpackings 37a can be adjusted. Preferably, in the state that the pressing packings 37a are mutually pressed against to each other with predetermined force, the pressing packings 37a can be moved symmetrically to each other. In this state, if the angle of one old tooth guide 37 is adjusted while holding the other old tooth guide 37, the pressing packings 37a may be individually moved.

## Claims

1. An articulator comprising:
a lower jaw fixing member (10) to mount a lower jaw model (100) thereon; and
an upper jaw fixing member (20) to mount an upper jaw model (200) thereon,
wherein the lower jaw fixing member (10) is vertically foldable with the upper jaw fixing member (20) about a hinge shaft (11), columns (12 and 22) formed at rear portions of the lower and upper jaw fixing members (10 and 20) has a same length, so that the hinge shaft (11) is formed on a line extending from an occlusal plane (α), thereby operating the lower and upper fixing members (10 and 20) vertically symmetrically to each other about the hinge shaft (11), and a tangential line (β) of rotation movement is perpendicular to the occlusal plane (α) if the lower jaw model (100) is vertically folded with the upper jaw model (200) about the hinge shaft (11), **characterized in that** the lower jaw fixing member (10) has a shaft (13) provided at an upper end of a column (12) formed at a rear portion, the hinge shaft (11) protrudes from both sides of the shaft (13), and the upper jaw fixing member (20) has rotation support members (21) which are provided at a lower end of a column (22) and provided in a substantially C shape with a groove (21a), such that the upper jaw fixing member (20) is axially coupled with the hinge shaft (11) and detachably coupled with the shaft (13) by a hook (23) formed at a central portion between the rotation support members (21),
that the hook (23) has a push switch (24), which is provided at a rear portion thereof and has a force of restoration by a spring (24a) to elastically operate, such that the hook (23) is detached through one touch scheme, and inclined surfaces (23b and 21b) are formed a front end portion of the hook (23) and a lower end portion of each rotation support member (21), such that press-fitting is possible, and that the rotation support member (21) has a gradient (21c) formed outward from an inner end portion of the groove (21a), such that the hinge shaft (11) is prevented from being locked when the upper jaw fixing member (20) is twisted left or right.

2. The articulator of claim 1, wherein a push bar (23a) protrudes downward at a locking part inside the hook (23) and pushes the shaft (13) forward when the push switch (24) is pressed, such that the shaft (13) is easily detached.

3. The articulator of claim 1, wherein a top surface of the groove (21a) of the rotation support member (21) is inclined at an angle of -2°, such that the upper jaw fixing member (20) more approximately moves to a physiological occlusal state of teeth when the upper jaw fixing member (20) is twisted left or right to more exactly perform occlusal measurement.

4. The articulator of claim 1, wherein a jig (30) is additionally provided to adjust a horizontal state of the lower jaw model (100), and the lower jaw fixing member (10) maintains a horizontal state by using a vertical pin (35) formed at a front portion of the jig (30) while correctly positioning the lower jaw model (100) on the occlusal plane (α).

5. The articulator of claim 4, wherein the lower jaw fixing member (10) has a shaft (13) provided at an upper end of a column (12) formed at a rear portion, the hinge shaft (11) protrudes from both sides of the shaft (13), and the jig (30) is provided at a rear portion thereof with a support member (32) which protrudes downward and has a mounting groove (31) therein, such that the hinge shaft (11) is firmly secured into the mounting groove (31) while the jig (30) is being detachably coupled with a shaft (13) by a hook (33) formed at the central portion between support members (32).

6. The articulator of claim 4, wherein the jig (30) has an interincisal point position pin (36a) slidably moving forward or backward by a knob (36), such that an interincisal point of the lower jaw model (100) is fixed.

7. The articulator of claim 6, wherein the jig (30) has old tooth guides (37) which are provide at a rear portion of the interincisal point position pin (36a) and include old tooth position pins (38) and knobs (39), and each old tooth position pin (38) is transferred left or right while being lifted up or down by the knob (39) such that a position of the old tooth position pin (38) is set.

8. The articulator of claim 7, wherein the old tooth guides (37) have hinge shafts, which are provided at outer peripheral surfaces thereof with pressing packings (37a) densely making contact with each other, to operate horizontally symmetrically to each other, and, if a force greater than an adhesion force is generated, the old tooth guides (37) individually adjust a rotational angle.

9. The articulator of claim 1, wherein the upper jaw fixing member (20) is provided at a front portion thereof with a guide pin (25) to hold a horizontal state of the upper jaw fixing member (20), and the guide pin (25) is provided at an upper end thereof with an adjusting unit (26) to vertically move up or move down the guide pin (25) while adjusting an angle of the guide pin (25), such that a height of the upper jaw fixing member (20) is adjusted.

10. The articulator of claim 9, wherein the adjusting unit (26) has an elongated hole (26a) in the upper portion of the guide pin (25) such that the elongated hole (26a) is coupled with a fixing shaft (26b) to vertically moving the guide pin (25) while adjusting the angle of the guide pin (25), and the adjusting unit (26) is coupled with a guide rail (27), which is provided at a front portion of the upper jaw fixing member (20), in a rail structure to slidably move forward or backward.

## Patentansprüche

1. Artikulator, der folgendes aufweist:
ein Unterkiefer-Fixierelement (10), um ein Unterkiefermodell (100) daran zu montieren; und
ein Oberkiefer-Fixierelement (20), um ein Oberkiefermodell (200) daran zu montieren,
wobei das Unterkiefer-Fixierelement (10) mit dem Oberkiefer-Fixierelement (20) um eine Gelenkwelle (11) vertikal zusammenklappbar ist, an hinteren Teilbereichen des Unter- und des Oberkiefer-Fixierelements (10 und 20) ausgebildete Säulen (12 und 22) gleich lang sind, so dass die Gelenkwelle (11) auf einer Linie ausgebildet ist, die sich von einer Okklusionsebene (α) erstreckt, um dadurch das Unter- und das Oberkiefer-Fixierelement (10 und 20) vertikal symmetrisch zueinander um die Gelenkwelle (11) zu betätigen, und eine Tangentiallinie (β) einer Drehbewegung rechtwinklig zur Okklusionsebene (α) ist, wenn das Unterkiefermodell (100) vertikal zum Oberkiefermodell (200) um die Gelenkwelle (11) umgeklappt ist, **dadurch gekennzeichnet, dass** das Unterkiefer-Fixierelement (10) eine Welle (13) hat, die an einem oberen Ende einer an einen hinteren Teilbereich ausgebildeten Säule (12) vorgesehen ist, die Gelenkwelle (11) von beiden Seiten der Welle (13) vorsteht und das Oberkiefer-Fixierelement (20) Drehstützelemente (21) hat, die an einem unteren Ende einer Säule (22) vorgesehen sind und in einer im Wesentlichen C-Form mit einer Nut (21a) versehen sind, so dass das Oberkiefer-Fixierelement (20) mit der Gelenkwelle (11) axial gekoppelt ist und mit der Welle (13) durch einen Haken (23) lösbar gekoppelt ist, der an einem zentralen Teilbereich zwischen den Drehstützelementen (21) ausgebildet ist,
dass der Haken (23) einen Druckschalter (24) hat, der an seinem hinteren Teilbereich vorgesehen ist und eine Wiederherstellungskraft durch eine Feder (24a) hat, um elastisch zu schalten, so dass der Haken (23) durch ein Berührungsschema gelöst wird, und geneigte Oberflächen (23b und 21 b) an einem vorderen Endteilbereich des Hakens (23) und einem unteren Endteilbereich jedes Drehstützelements (21) ausgebildet sind, so dass eine Presseinpassung möglich ist, und dass das Drehstützelement (21) eine Neigung (21c) hat, die von einem inneren Endteilbereich der Nut (21 a) nach außen ausgebildet ist, so dass verhindert wird, dass die Gelenkwelle (11) verriegelt wird, wenn das Oberkiefer-Fixierelement (20) nach links oder rechts verdreht wird.

2. Artikulator nach Anspruch 1, wobei eine Druckstange (23a) an einem Verriegelungsteil innerhalb des Hakens (23) nach unten vorsteht und die Welle (13) nach vorn drückt, wenn der Druckschalter (24) gedrückt wird, so dass die Welle (13) auf einfache Weise gelöst wird.

3. Artikulator nach Anspruch 1, wobei eine obere Oberfläche der Nut (21a) des Drehstützelements (21) um einen Winkel von -2° geneigt ist, so dass das Oberkiefer-Fixierelement (20) sich eher annähernd zu einem physiologischen Okklusionszustand von Zähnen bewegt, wenn das Oberkiefer-Fixierelement (20) nach links oder rechts verdreht wird, um eine Okklusionsmessung exakter durchzuführen.

4. Artikulator nach Anspruch 1, wobei eine Spannvorrichtung (30) zusätzlich vorgesehen ist, um einen horizontalen Zustand des Unterkiefermodells (100) einzustellen, und das Unterkiefer-Fixierelement (10) einen horizontalen Zustand beibehält, indem ein vertikaler Stift (35) verwendet wird, der an einem vorderen Teilbereich der Spannvorrichtung (30) ausgebildet ist, während das Unterkiefermodell (100) auf der Okklusionsebene (α) richtig positioniert wird.

5. Artikulator nach Anspruch 4, wobei das Unterkiefer-Fixierelement (10) eine Welle (13) hat, die an einem oberen Ende einer Säule (12) vorgesehen ist, die an einem hinteren Teilbereich ausgebildet ist, die Gelenkwelle (11) von beiden Seiten der Welle (13) vorsteht und die Spannvorrichtung (30) an ihrem hinteren Teilbereich mit einem Stützelement (32) versehen ist, das nach unten vorsteht und eine Montagenut (31) darin hat, so dass die Gelenkwelle (11) fest in die Montagenut (31) gesichert ist, während die Spannvorrichtung (30) durch einen Haken (33), der an einem zentralen Teilbereich zwischen Stützelementen (32) ausgebildet ist, mit einer Welle (13) lösbar gekoppelt wird.

6. Artikulator nach Anspruch 4, wobei die Spannvorrichtung (30) einen Interinzisalpunktpositionsstift (36a) hat, der sich durch einen Drehknopf (36) gleitbar nach vorn oder nach hinten bewegt, so dass ein Interinzisalpunkt des Unterkiefermodells (100) fixiert wird.

7. Artikulator nach Anspruch 6, wobei die Spannvorrichtung (30) Altzahnführungen (37) hat, die an einem hinteren Teilbereich des Interinzisalpunktpositionsstifts (36a) vorgesehen sind und Altzahnpositionsstifte (38) und Drehknöpfe (39) enthalten, und jeder Altzahnpositionsstift (38) nach links oder rechts transferiert wird, während er durch den Drehknopf (39) nach oben gehoben wird, so dass eine Position des Altzahnpositionsstifts (38) eingestellt wird.

8. Artikulator nach Anspruch 7, wobei die Altzahnführungen (37) Gelenkwellen haben, die an ihren äußeren peripheren Oberflächen mit Druckpackungen (37a) versehen sind, die einen dichten Kontakt zueinander herstellen, um horizontal symmetrisch zueinander zu wirken, und dann, wenn eine Kraft, die größer als eine Klebekraft ist, erzeugt wird, die Altzahnführungen (37) einen Drehwinkel individuell einstellen.

9. Artikulator nach Anspruch 1, wobei das Oberkiefer-Fixierelement (20) an seinem vorderen Teilbereich mit einem Führungsstift (25) versehen ist, um einen horizontalen Zustand des Oberkiefer-Fixierelements (20) zu halten, und der Führungsstift (25) an seinem oberen Ende mit einer Einstelleinheit (26) versehen ist, um den Führungsstift (25) während eines Einstellens eines Winkels des Führungsstifts (25) vertikal nach oben zu bewegen oder nach unten zu bewegen, so dass eine Höhe des Oberkiefer-Fixierelements (20) eingestellt wird.

10. Artikulator nach Anspruch 9, wobei die Einstelleinheit (26) ein Längsloch (26a) im oberen Teilbereich des Führungsstifts (25) hat, so dass das Längsloch (26a) mit einer Fixierwelle (26b) gekoppelt ist, um den Führungsstift (25) während eines Einstellens des Winkels des Führungsstifts (25) vertikal zu bewegen, und die Einstelleinheit (26) mit einer Führungsschiene (27), die an einem vorderen Teilbereich des Oberkiefer-Fixierelements (20) vorgesehen ist, in einer Schienenstruktur gekoppelt ist, um sich gleitbar nach vorn oder nach hinten zu bewegen.

## Revendications

1. Articulateur comprenant :
un élément de fixation de la mâchoire inférieure (10) destiné au montage d'un modèle de mâchoire inférieure (100), et
un élément de fixation de la mâchoire supérieure (20) destiné au montage d'un modèle de mâchoire supérieure (200),
l'élément de fixation de la mâchoire inférieure (10) pouvant être plié, avec l'élément de fixation de la mâchoire supérieure (20), dans le sens vertical autour d'un axe d'articulation (11), des colonnes (12 et 22) formées sur des parties arrière des éléments de fixation de mâchoires inférieure et supérieure (10 et 20) étant de longueur identique de manière à ce que l'axe d'articulation (11) soit formé sur une ligne s'étendant depuis un plan occlusal (α), ce qui entraîne l'actionnement vertical et symétrique, l'un par rapport à l'autre, des éléments de fixation inférieur et supérieur (10 et 20) autour de l'axe d'articulation (11) et une ligne tangentielle (β) d'un mouvement de rotation étant perpendiculaire au plan occlusal (α) lorsque le modèle de mâchoire inférieure (100) est plié, avec le modèle de mâchoire supérieure (200), dans le sens vertical autour de l'axe d'articulation (11), **caractérisé en ce que** l'élément de fixation de la mâchoire inférieure (10) présente un axe (13) qui est prévu sur une extrémité supérieure d'une colonne (12) formée sur une partie arrière, l'axe d'articulation (11) fait saillie des deux côtés de l'axe (13) et l'élément de fixation de la mâchoire supérieure (20) présente des éléments de support rotatifs (21) qui sont prévus sur une extrémité inférieure d'une colonne (22) et présentent essentiellement une forme de C avec une gorge (21 a) de sorte que l'élément de fixation de la mâchoire supérieure (20) soit couplé axialement à l'axe d'articulation (11) et qu'il soit couplé de manière détachable à l'axe (13) par un crochet (23) formé sur une partie centrale, entre les éléments de support rotatifs (21), que le crochet (23) est doté d'un bouton-poussoir (24) sur sa partie arrière et qu'il dispose d'une force de rappel fournie par un ressort (24a) pour un fonctionnement élastique de manière à ce que le crochet (23) soit détaché par l'intermédiaire d'un système monotouche, et que des surfaces inclinées (23b et 21 b) soient formées sur l'extrémité avant du crochet (23) et sur l'extrémité inférieure de chaque élément de support rotatif (21) de manière à permettre un ajustage serré, et **caractérisé en ce que** l'élément de support rotatif (21) présente un gradient (21c) formé en direction de l'extérieur d'une partie de l'extrémité intérieure de la gorge (21 a) de manière à ce que l'axe d'articulation (11) ne puisse pas être verrouillé lorsque l'élément de fixation de la mâchoire supérieure (20) est orienté vers la gauche ou vers la droite.

2. Articulateur suivant la revendication 1, dans lequel une barre de poussée (23a) fait saillie vers le bas au niveau d'une partie de verrouillage à l'intérieur du crochet (23) et pousse l'axe (13) vers l'avant, lorsque le bouton-poussoir (24) est pressé, de sorte que l'axe (13) soit facilement détaché.

3. Articulateur suivant la revendication 1, dans lequel une surface supérieure de la gorge (21 a) de l'élément de support rotatif (21) est inclinée selon un angle de -2° de manière à ce que l'élément de fixation de la mâchoire supérieure (20) s'approche approximativement d'un état occlusal physiologique des dents lorsque l'élément de fixation de la mâchoire supérieure (20) est orienté vers la gauche ou vers la droite pour effectuer une mesure occlusale de manière plus précise.

4. Articulateur suivant la revendication 1, dans lequel un gabarit (30) est prévu en plus pour régler un état horizontal du modèle de mâchoire inférieure (100), et l'élément de fixation de la mâchoire inférieure (10) maintient un état horizontal en utilisant une tige verticale (35) formée sur une partie avant du gabarit (30) pendant le positionnement correct du modèle de mâchoire inférieure (100) sur le plan occlusal (α).

5. Articulateur suivant la revendication 4, dans lequel l'élément de fixation de la mâchoire inférieure (10) présente un axe (13) qui est prévu sur une extrémité supérieure d'une colonne (12) formée sur une partie arrière, l'axe d'articulation (11) faisant saillie des deux côtés de l'axe (13), et le gabarit (30) est prévu sur sa partie arrière, avec un élément de support (32) faisant saillie vers le bas et comportant une gorge de montage (31) de sorte que l'axe d'articulation (11) soit fixé solidement dans la gorge de montage (31) pendant que le gabarit (30) est couplé de façon détachable à un axe (13) par un crochet (33) formé sur la partie centrale entre les éléments de support (32).

6. Articulateur suivant la revendication 4, dans lequel le gabarit (30) présente une tige de positionnement de point interincisif (36a) pouvant être déplacée par coulissement vers l'avant ou vers l'arrière au moyen d'un bouton (36) de manière à ce qu'un point interincisif du modèle de mâchoire inférieure (100) soit fixé.

7. Articulateur suivant la revendication 6, dans lequel le gabarit (30) présente des éléments de guidage (37) servant au positionnement de dents naturelles, éléments de guidage, qui sont prévus sur une partie arrière de la tige de positionnement du point interincisif (36a) et comportent des tiges de positionnement de dents naturelles (38), ainsi que des boutons (39), et chaque tige de positionnement de dent naturelle (38) est transférée vers la gauche ou vers la droite pendant qu'elle est soulevée ou abaissée par le bouton (39) de manière à ce qu'une position de la tige de la positionnement de dent naturelle (38) soit ensemble.

8. Articulateur suivant la revendication 7, dans lequel les éléments de guidage (37) servant au positionnement de dents naturelles comportent des axes d'articulation, prévus au niveau des surfaces périphériques extérieures avec des garnitures de compression (37a) en contact étroit l'une avec l'autre pour un fonctionnement horizontalement symétrique l'une par rapport à l'autre, et si une force supérieure à une force d'adhésion est générée, les éléments de guidage (37) servant au positionnement de dents naturelles règlent individuellement un angle de rotation.

9. Articulateur suivant la revendication 1, sur la partie avant duquel est prévu l'élément de fixation de la mâchoire supérieure (20) avec une tige de guidage (25) servant à maintenir un état horizontal de l'élément de fixation de la mâchoire supérieure (20), à l'extrémité supérieure duquel est prévue la tige de guidage (25) avec une unité de réglage (26) servant à soulever ou abaisser verticalement la tige de guidage (25) pendant le réglage d'un angle de celle-ci de sorte qu'une hauteur de l'élément de fixation de la mâchoire supérieure (20) soit réglée.

10. Articulateur suivant la revendication 9, dans lequel l'unité de réglage (26) présente un trou oblong (26a) dans la partie supérieure de la tige de guidage (25) de manière à ce que le trou oblong (26a) soit couplé à un axe de fixation (26b), pour déplacer la tige de guidage (25) verticalement pendant le réglage de l'angle de la tige de guidage (25), et l'unité de réglage (26) est couplée à un rail de guidage (27), qui est prévu sur une partie avant de l'élément de fixation de la mâchoire supérieure (20), dans une structure de rail pour pouvoir coulisser vers l'avant ou vers l'arrière.
